# EUROPEAN PATENT SPECIFICATION

(11) **EP 1 638 809 B1**
(45) Date of publication and mention of the grant of the patent: **16.04.2008**
(21) Application number: 04746543.0
(22) Date of filing: 22.06.2004
(51) Int. Cl.: B60Q 3/02

(54) **UNIT HOLDER FOR ELECTRICAL EQUIPMENT, FOR EXAMPLE FOR A LAMP ASSEMBLY**
MONTAGEANORDNUNG FÜR EINE ELEKTRISCHE EINHEIT, ZUM BEISPIEL EINE LEUCHTENEINHEIT
UNITE DE MAINTIEN POUR EQUIPEMENT ELECTRIQUE, PAR EXEMPLE POUR UN ENSEMBLE LAMPE

(30) Priority: 27.06.2003 JP 2003184987
(43) Date of publication of application: 29.03.2006
(73) Proprietor: YAZAKI CORPORATION, Minato-ku Tokyo 108-8333 (JP)
(72) Inventor: SAWAYANAGI, Masahiro c/o Yazaki Parts Co., Ltd., Haibara-gun, Shizuoka 421-0492 (JP); OHNO, Mitsuyoshi c/o TOYOTA JIDOSHA KABUSHIKI KAISHA, Toyota-shi, Aichi 471-8571 (JP); KIMURA, Taya c/o TOYOTA JIDOSHA KABUSHIKI KAISHA, Toyota-shi, Aichi 471-8571 (JP)
(74) Representative: Grünecker, Kinkeldey, Stockmair & Schwanhäusser Anwaltssozietät
(86) International application number: PCT/JP2004/009074
(87) International publication number: WO 2005/000632

(56) References cited:
- EP-A- 1 281 572
- US-B1- 6 283 621
- PATENT ABSTRACTS OF JAPAN vol. 2000, no. 23, 10 February 2001 (2001-02-10) -& JP 2001 155801 A (HONDA ACCESS CORP), 8 June 2001 (2001-06-08)

## Description

This invention relates to an electrical equipment unit holder.

In the case of mounting an electrical equipment unit, such as a room lamp, a courtesy lamp or a switch, on an interior wall member (such as a roof trim, a door trim or a dashboard) covering a car body panel, the electrical equipment unit has heretofore been mounted in an electrical equipment-mounting window formed through the interior wall member.

In the conventional electrical equipment unit-mounting method, when the electrical equipment unit is to be mounted on the interior wall member such as a roof trim, it is necessary to carry out an operation in which a connector, connected to a car body-side harness (such as a roof harness), is drawn out through the electrical equipment-mounting window, and then is fitted relative to the electrical equipment unit. After this fitting operation, the electrical equipment unit must be fixed to the interior wall member by screws or the like, and the mounting operation (which the operator must carry out in an unnatural posture in a narrow operation space available in a car room) was complicated, and therefore it was difficult to enhance the efficiency of the operation.

Therefore, there is proposed a method in which the electrical equipment unit, such for example as a room lamp, is beforehand attached to a roof trim (interior wall member) to form a roof module, and this roof module is mounted on a body roof. By doing so, the electrical equipment unit-mounting operation can be omitted at the time of mounting the roof trim, so that the mounting operation is easy as shown in Unexamined Japanese Patent Publication 2003-40032.

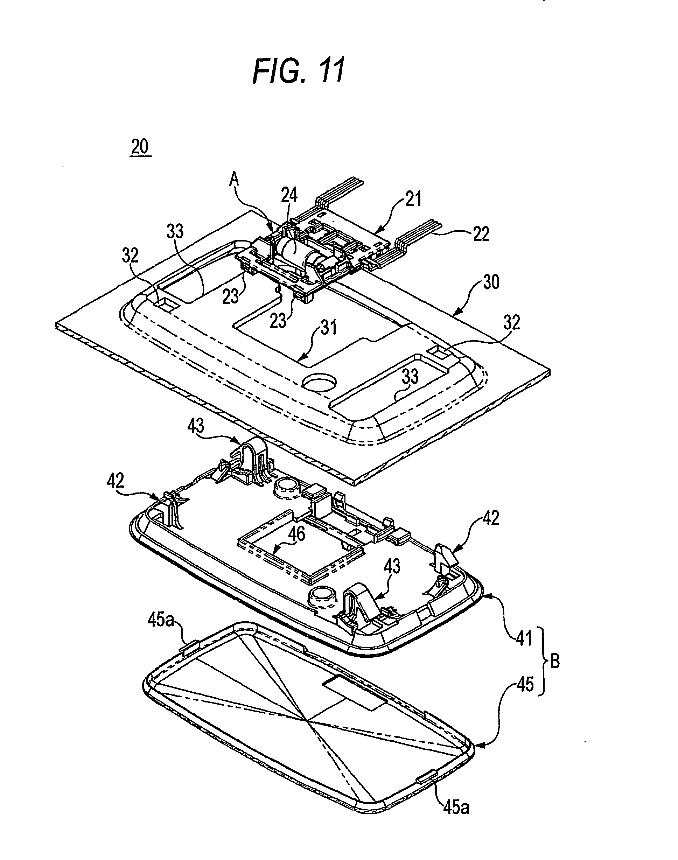

Fig. 11 is an exploded, perspective view showing important portions of a room lamp unit-mounting structure in which a room lamp unit is beforehand attached to a roof trim to form such a roof module.

The room lamp 20, shown in Fig. 11, is an electrical equipment unit which is adapted to be mounted in a lamp-mounting window 31 formed through the roof trim 30 (serving as an interior wall member) covering a body roof (car body panel).

The room lamp 20 comprises a function portion A for mounting on that side (upper side in the drawings) of the roof trim 30 facing the body roof, and a design portion B for mounting on that side (lower side in the drawings) of the roof trim 30 facing the room, the function portion A including a bulb 24 mounted in a housing 21, a switch portion (not shown) and so on, while the design portion B includes a cover lens 45, and a holder 41.

An FFC 22 (which is a cable (wires) forming a roof harness) is connected via the switch portion (not shown) to the bulb 24 mounted in the housing 21 of the function portion A.

Namely, a connection portion of the FFC 22 (which is the roof harness beforehand installed on the roof trim 30) is electrically connected to a wire connection portion of the function portion A, and at this time the operator can effect this connecting operation with his face directed downward while confirming this connected condition with the eyes.

The cover lens 45 of the design portion B is integrally attached to the holder 41 by engaging retaining projections 45a respectively with engagement portions (not shown) of the holder 41.

The holder 41 includes engagement claws 42 for engagement respectively in engagement holes 32 (formed through the roof trim 30) to fix the room lamp 20 and the roof trim 30 to each other, a housing fitting hole 46 for fittingly receiving the housing 21, and fixing means 43 for fixing the room lamp 20 and a reinforce (not shown) of the body roof to each other.

For example, when the room lamp 20 of Fig. 11 is to be mounted on an automobile, first, the engagement claws 42 of the design portion B of the room lamp 20 are engaged respectively in the engagement holes 32 in the roof trim 30 to thereby fix the holder 41 and the roof trim 30 to each other before bringing the room lamp and the roof trim to a car-assembling line.

Then, the housing 21, forming the lamp function portion A of the room lamp 20 connected to the connection portion of the FFC 22, is fitted into the housing fitting hole 46 in the holder 41 from that side of the roof trim 30 facing the body roof, so that the lamp function portion A is directly mounted on the roof trim 30.

Then, the FFC 22 is installed on that side of the roof trim 30 facing the body roof, and roof accessories (not shown) such as a back mirror and a sun visor are beforehand attached to the roof trim 30, thereby forming a roof module in which the room lamp 20 and the roof trim 30 with the roof accessories are integrally combined together.

Then, this roof module is brought into the car-assembling line, and is mounted on the body roof. In this room lamp-fixing structure, the room lamp 20 and the roof trim 30 can thus be simultaneously fixed to the body roof in the car-assembling line, and therefore the time and labor, required for the assembling operation in the car-assembling line, can be reduced.

In the room lamp 20, the function portion A, having the housing 21 connected to the FFC 22, and the design portion B, having the cover lens 45 and the holder 41, are integrally combined together in the car-assembling line depending upon the request from automobile company.

Therefore, the FFC 22, connected to the housing 21, is beforehand produced in another production line, and then is packed, and is transferred to the car-assembling line depending upon the request from automobile company.

Another document JP 2001155801 discloses a connecting structure for electric machinery with a function portion, a design portion, an electrical unit holder, a retaining portion and an interconnection portion. The electrical unit holder is assembled with a joint terminal.

However, recently, The room lamp includes the plurality of function portions each including the housing having the bulb mounted thereon, and these housings are connected together by the FFC.

It is therefore an object of this invention to provide an electrical equipment unit holder which enhances the efficiency of an operation for mounting an electrical equipment unit (comprising a plurality of function portions and a design portion attached thereto) in an electrical equipment-mounting window formed in an interior wall member, and prevents an error in the mounting of these function portions.

The above object of the present invention has been achieved by an electrical equipment unit holder wherein an electrical equipment unit comprises a plurality of function portions connected together by wires, and a design portion attached to the function portions, characterized in that the unit holder includes retaining portions for respectively releasably retaining the function portions, and an interconnecting portion interconnecting the adjacent retaining portions, and when the electrical equipment unit is to be mounted in an electrical equipment-mounting window formed in an interior wall member, the unit holder holds the adjacent function portions spaced a predetermined distance from each other by the retaining portions and the interconnecting portion.

In the electrical equipment unit holder of the above construction, the plurality of function portions, connected together by the wires, are held spaced the predetermined distance from each other, and therefore when the function portions are packed and transferred, there are no fears that the wires are twisted and that the wires are entangled with the function portions.

And besides, at the time of attaching the plurality of function portions to the design portion, an error (such as an error in mounting position and mounting direction) in the mounting of the function portions (held by the electrical equipment unit holder) is prevented.

Preferably, the interconnecting portion has elasticity.

In this case, when the electrical equipment unit holder, holding the plurality of function portions spaced the predetermined distance from each other, is packed in a transfer box (not shown), the electrical equipment unit holder can be bent, following the wires, and therefore is not bulky, so that the packed condition is compact.

Preferably, the electrical equipment unit is a lamp unit having bulbs provided respectively at the function portions, and bulb covers for respectively protecting the bulbs are formed respectively at the retaining portions in juxtaposed relation thereto.

In this case, each bulb, provided at the corresponding function portion of the lamp unit, is protected by the bulb cover provided at the electrical equipment unit holder, and therefore the bulb (which is exposed to the exterior until the function portions are attached to the design portion) is prevented from contact with other members, for example, during the transport.

Preferably, that side of each of the bulb covers, facing a room, can be opened.

In this case, that side of each bulb cover (which is disposed at the lower side of the electrical equipment unit holder), facing the room, can be opened, and therefore when the function portions of the lamp unit are to be held by the electrical equipment unit holder and when said electrical equipment unit holder is to be detached from the function portions, the electrical equipment unit holder can be easily attached to and detached from the function portions.

Preferably, the bulb cover can be opened along a guide provided at a portion for mounting the bulb thereon.

In this case, when the electrical equipment unit holder is to be detached from the lamp unit, each bulb cover is opened by the guide provided at the bulb-mounting portion, and therefore the electrical equipment unit holder can be removed without damaging the bulbs.
Fig. 1 is a perspective view of a first embodiment of an electrical equipment unit holder of the present invention.
Fig. 2 is a front-elevational view explanatory of a process of attaching the electrical equipment unit holder of Fig. 1 to function portions.
Fig. 3A is a cross-sectional view showing a condition in which a bulb cover for covering a bulb is in an open condition, Fig. 3B is a cross-sectional view showing a condition in which lock portions of the bulb cover are unlocked, and Fig. 3C is a cross-sectional view showing a condition in which the bulb cover is in a closed condition.
Fig. 4 is a cross-sectional view showing a condition in which the bulb is covered with the bulb cover.
Fig. 5 is a front-elevational view explanatory of a condition in which the electrical equipment unit holder of Fig. 2 is attached to the function portions.
Fig. 6 is a perspective view explanatory of a process of attaching the function portions, held by the electrical equipment unit holder of Fig. 5, to a design portion.
Fig. 7 is a perspective view explanatory of the process of attaching the function portions, held by the electrical equipment unit holder of Fig. 5, to the design portion.
Fig. 8 is a perspective view explanatory of the process of attaching the function portions, held by the electrical equipment unit holder of Fig. 5, to the design portion.
Fig. 9 is an exploded, perspective view of a second embodiment of an electrical equipment unit holder of the invention, showing important portions thereof.
Fig. 10 is an exploded, perspective view of a conventional room lamp-mounting structure, showing important portions thereof.
Fig. 11 is an exploded, perspective view of a room lamp unit comprising a plurality of function portions and a design portion attached thereto.

One preferred embodiment of an electrical equipment unit holder of the present invention will now be described in detail with reference to the accompanying drawings.

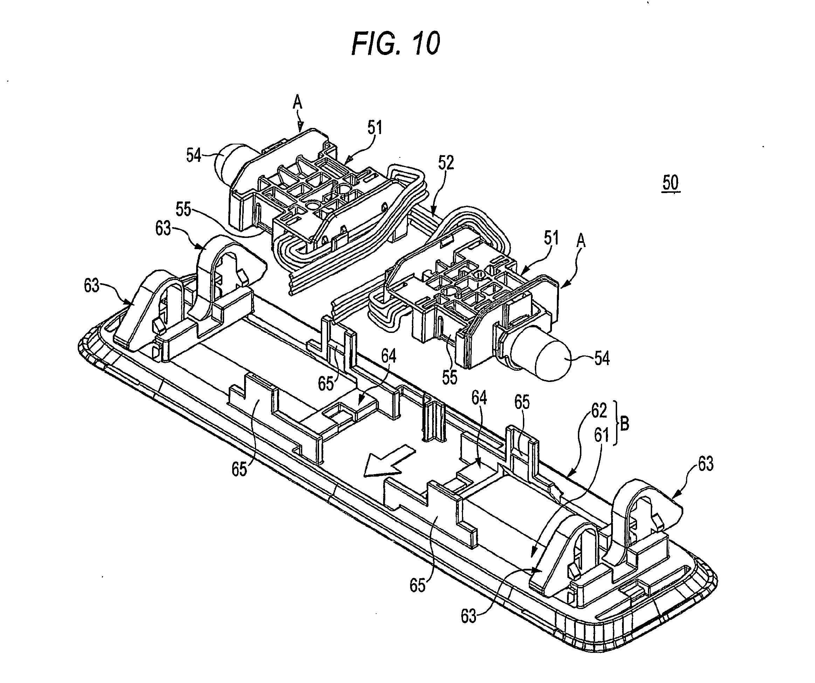

A room lamp 50, shown in Fig. 10, is different in type from the room lamp 20 shown in Fig. 11. Like the room lamp 20, the room lamp 50 is an electrical equipment unit which is adapted to be mounted in a lamp-mounting window formed through a roof trim (not shown) serving as an interior wall member covering a body roof (car body panel).

The room lamp 50 comprises a pair of function portions A for mounting on that side of the roof trim facing the body roof, and a design portion B for mounting on that side of the roof trim facing the room, each of the function portions A including a housing 51 having a bulb 54 mounted thereon, while the design portion B includes a cover lens 61, and a holder 62.

An FFC 52 (which is a cable forming a roof harness) is connected to the bulbs 54 mounted respectively on the housings 51 of the function portions A.

The cover lens 61 of the design portion B is integrally attached to the holder 62 by engagement means (not shown).

The holder 62 includes fixing means 63 for engagement with an edge of the lamp mounting window (formed through the roof trim (not shown)) to fix the room lamp 50 and the roof trim to each other, and housing retaining portions 65 for retaining engagement respectively with engagement-purpose elastic piece portions 55 (formed on the housings 51) to fixedly hold the housings 51 respectively in housing mounting portions 64.

The room lamp 50 includes the plurality of function portions A each including the housing 51 having the bulb 54 mounted thereon, and these housings 51 and 51 are connected together by the FFC 52.

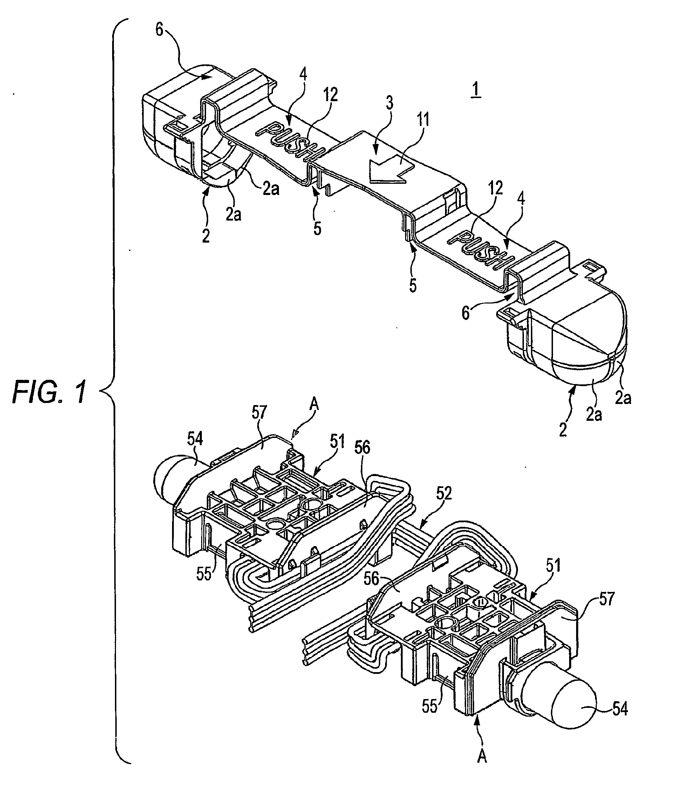

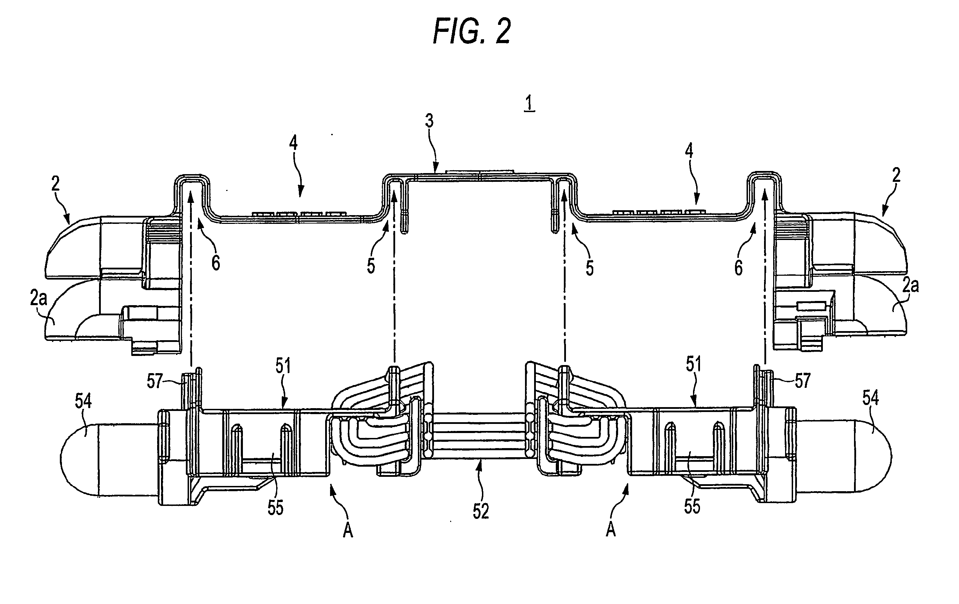

The lamp unit holder 1 of this first embodiment, shown in Figs. 1 and 2, is the electrical equipment unit holder which is made of a synthetic resin, and holds housings 51 and 51 of the two function portions A (which are connected to an FFC 52) spaced a predetermined distance from each other so as to prevent that portion of the FFC 52, extending between the housings 51 and 51, from being twisted and also to prevent those portions of the FFC 52, extending long respectively from the housings 51, from being entangled.

The lamp unit holder 1 is formed into a strap-like configuration, and includes a pair of retaining portions 4 and 4 for respectively releasably retaining the housings 51 and 51, and an interconnecting portion 3 interconnecting the retaining portions 4 and 4. The bulb cover 2 for protecting the bulb 54 mounted on the housing 51 is formed at a distal end of each retaining portion 4 in juxtaposed relation thereto.

Grip portions 5 and 6 are formed at each of the retaining portions 4, and these grip portions 5 and 6 respectively grip upper edge portions of vertical walls 56 and 57 formed on and projecting from an upper surface of the corresponding housing 51.

Each bulb cover 2, formed at the distal end of the corresponding retaining portion 4, has a bag-like shape, and surrounds the periphery of the bulb 54. The bulb cover 2 has a pair of door portions 2a and 2a provided at a lower side (Fig. 2) thereof (i.e., that side thereof facing a room), and when the unit holder is to be attached to the function portions, the pair of door portions 2a and 2a can be opened away from each other in the transverse direction on thin hinge portions, so that that side of the bulb cover 2, facing the room, can be opened (see Fig. 2).

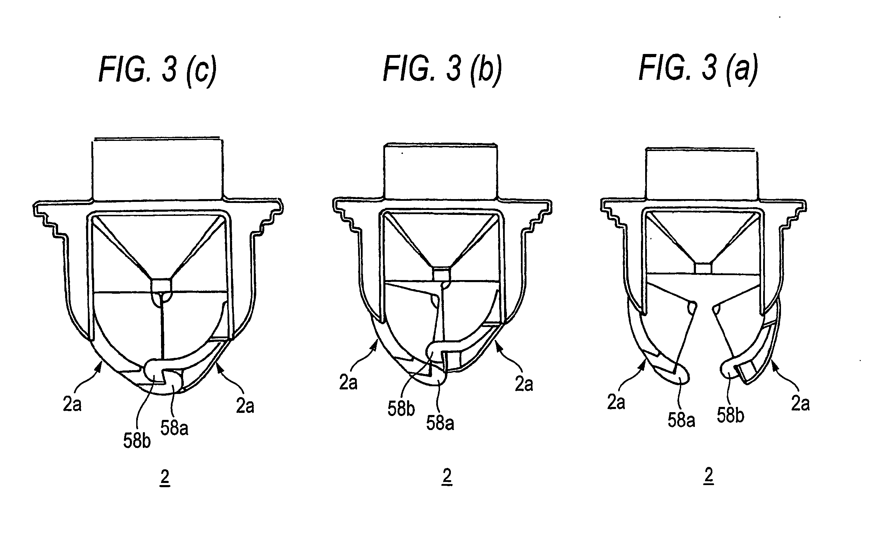

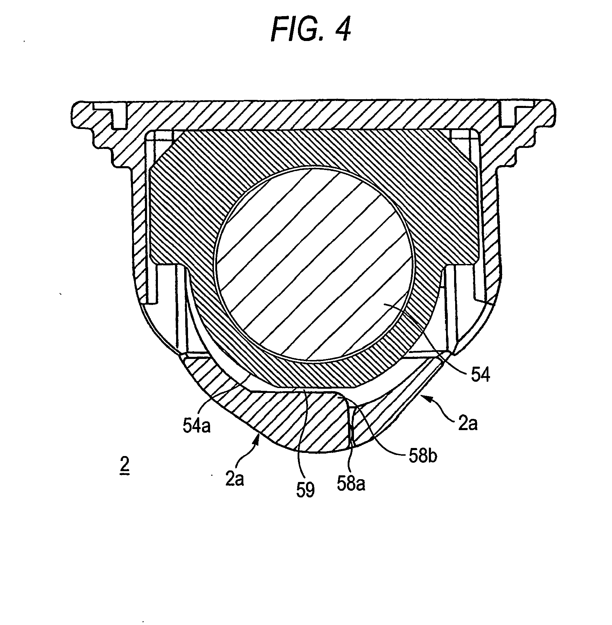

As shown in Figs. 3A to 3C, a sliding portion 59 is formed at a distal end of each of the door portions 2a and 2a of the bulb cover 2, and projects inwardly (toward the bulb 54), and these sliding portions 59 can move along an outer peripheral surface of a guide 54a provided at a bulb (54) -mounting portion. As shown in Fig. 4, the diameter of the outer peripheral surface of the guide 54a is larger than the outer diameter of the bulb 54. As shown in Fig. 3A, lock portions 58a and 58b are formed respectively at the distal ends of the two door portions 2a and 2a, and can be brought into locking engagement with each other.

Therefore, when the two door portions 2a and 2a are closed, the lock portion 58a slides over the lock portion 58b as shown in Fig. 3B, and when the two door portions 2a and 2a are completely closed, the two lock portions 58a and 58b are brought into locking engagement with each other to hold the door portions 2a and 2a in a locked condition as shown in Fig. 3C. As a result, each bulb 54 is enclosed by the corresponding bulb cover 2, and therefore is protected by it as shown in Fig. 4.

With this construction, the door portions 2a and 2a of each bulb cover 2 will not accidentally open during the transport and during the operation, and therefore the bulb 54 will not be exposed to the exterior, and will not be damaged. For opening the door portions 2a and 2a, the outer lock portion 58a is pulled outwardly to be moved onto the inner lock portion 58b as shown in Fig. 3B, thereby canceling the locked condition. Then, when the lamp unit holder 1 is upwardly moved apart from the function portions A, the sliding portions 59 of the two door portions 2a and 2a of each bulb cover slide along the outer peripheral surface of the guide 54a, so that the two door portions 2a and 2a are opened. Therefore, the lamp unit holder 1 can be removed without interference of the bulb covers 2 with the respective bulbs 54.

The thin plate-like interconnecting portion 3 can be elastically deformed in the longitudinal direction of the lamp unit holder 1.

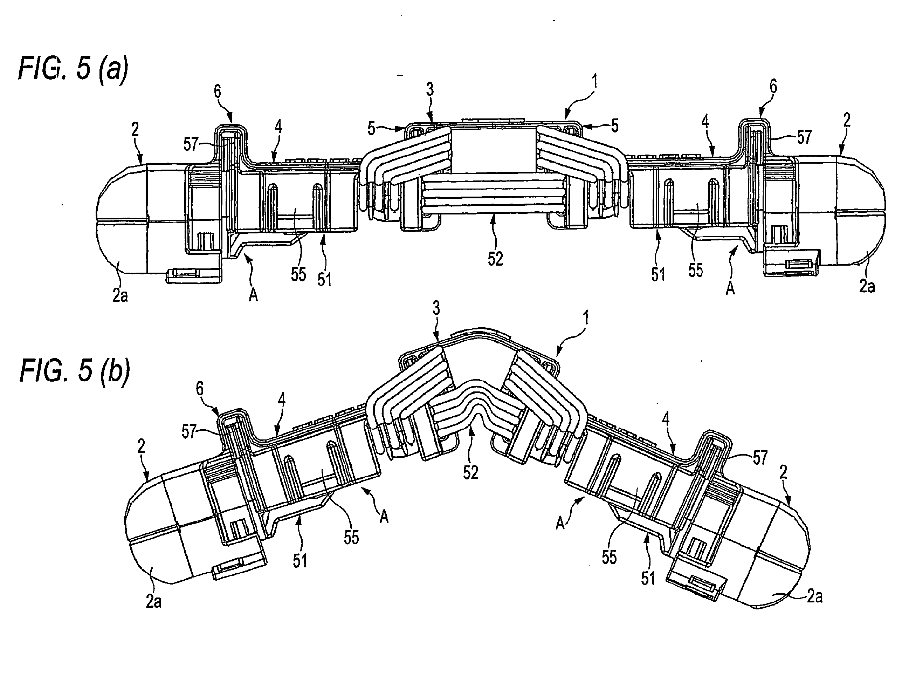

Therefore, when the upper edge portions of the vertical walls 56 and 57 of each housing 51 are press-fitted respectively into the grip portions 5 and 6 of the corresponding retaining portion 4 of the lamp unit holder 1 as shown in Fig. 2, the pair of housings 51 and 51 (each having the vertical walls 56 and 57 fixedly gripped by the grip portions 5 and 6, respectively) are held in the lamp unit holder 1 in such a manner that the two housings 51 and 51 are spaced the predetermined distance from each other as shown in Fig. 5A. At this time, the two door portions 2a and 2a of each bulb cover 2 are beforehand opened, and after the housings 51 and 51 are held in the lamp unit holder, the two door portions 2a and 2a are closed to be locked to each other as described above.

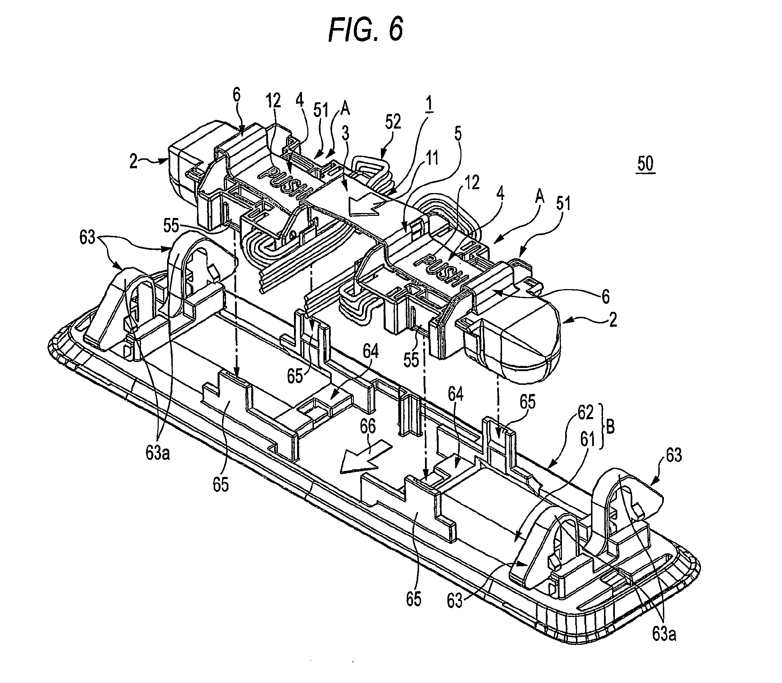

Namely, in the room lamp 50, the pair of function portions A, each including the housing 51 connected to the FFC 52, and the design portion B, including a cover lens 61 and a holder 62, are integrally combined together in a car-assembling line as shown in Fig. 6. The FFC 22 to which the housings 51 and 51 are connected is beforehand produced in another production line, and then is packed, and is transferred to the car-assembling line.

The pair of housings 51 and 51 are held in the lamp unit holder 1 in such a manner that these housings 51 and 51 are spaced the predetermined distance from each other as described above. Therefore, when the housings are packed and transferred, there is no fear that that portion of the FFC 52, extending between the housings 51 and 51, is twisted and that those portions of the FFC 52, extending long respectively from the two housings 51 and 51, from being entangled.

The interconnecting portion 3 of the lamp unit holder 1 has elasticity, and can be elastically deformed in the longitudinal direction of the lamp unit holder 1. Therefore, when the lamp unit holder 1, holding the pair of housings 51 and 51 spaced the predetermined distance from each other, is packed in a transfer box (not shown), the lamp unit holder 1 can be bent, following the packed FFC 52 as shown in Fig. 5B, and therefore is not bulky, so that the packed condition is compact.

The bare bulbs 54, mounted respectively on the housings 51, are protected by the pair of bulb covers 2 and 2, respectively, and therefore the bulbs 54 will not be exposed to the exterior until the lamp unit holder 1 is attached to the design portion B, and thus the bulbs 54 are prevented from contact with other members, for example, during the transport.

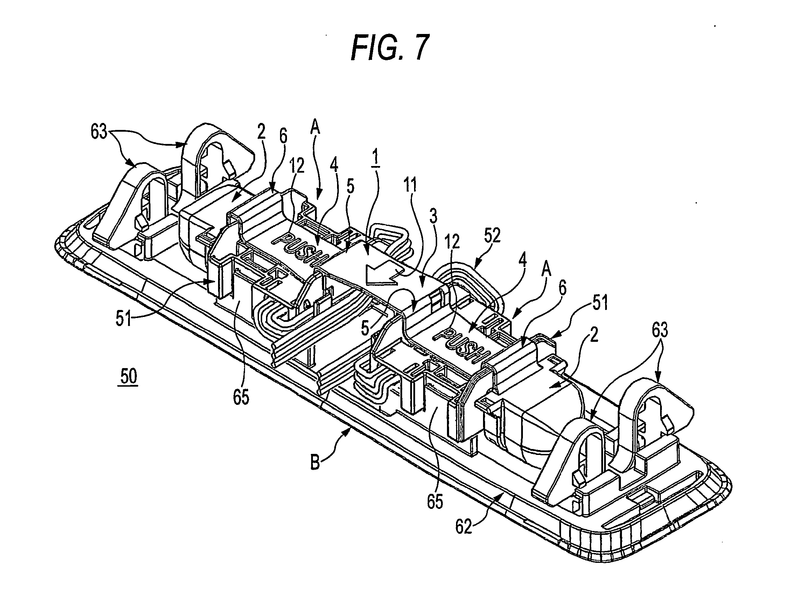

The pair of housings 51 and 51, integrally held by the lamp unit holder 1, are pushed respectively into housing mounting portions 64 of the holder 62 of the design portion B (mounted in a lamp mounting window of a roof trim (not shown)), and engagement-purpose elastic piece portions 55 of each housing 51 are retainingly engaged respectively with corresponding housing retaining portions 65 of the holder 62, so that the two housings 51 and 51 are fixedly held respectively in the housing mounting portions 64 as shown in Fig. 7.

At this time, the plurality of engagement-purpose elastic piece portions 55 can be easily retainingly engaged respectively with the housing retaining portions 65 since the pair of housings 51 and 51 are held spaced the predetermined distance from each other by the lamp unit holder 1.

Fixing means 63 are the highest in the design portion B as shown in Fig. 6, and during the mounting of the room lamp 50 on the roof trim, upper end surfaces 63a of the fixing means 63 are first brought into abutting engagement with a roof plate, and serve to secure a predetermined space or gap between the roof plate and the cover lens 61. With this construction, the bulbs 54 and the other parts, contained in the function portions A, are prevented from inadvertently striking against the roof plate during this mounting operation, and therefore are prevented from damage or the like. And besides, the predetermined gap is kept even after this mounting operation is completed, thereby protecting the parts and others.

A marking 66 is formed on the upper surface of the holder 62, while a marking 11 is formed on the upper surface of the interconnecting portion 3, and these markings 66 and 11 indicate the mounting direction. Therefore, the operator can easily recognize the direction of mounting of the two housings 51 and 51 relative to the holder 62, and therefore the efficiency of the operation is enhanced.

A marking 12 indicative of a pressing portion is formed on the upper surface of each of the retaining portions 4, and the operator can easily recognize the optimum pressing portion which is to be pressed for pushing the housing 51 into the housing mounting portion 64. Therefore, the housings 51 can be positively fixedly held in the holder 62, and any portion of the housing 51 which should not be pressed will not be inadvertently pressed, thereby preventing the deformation of the housing.

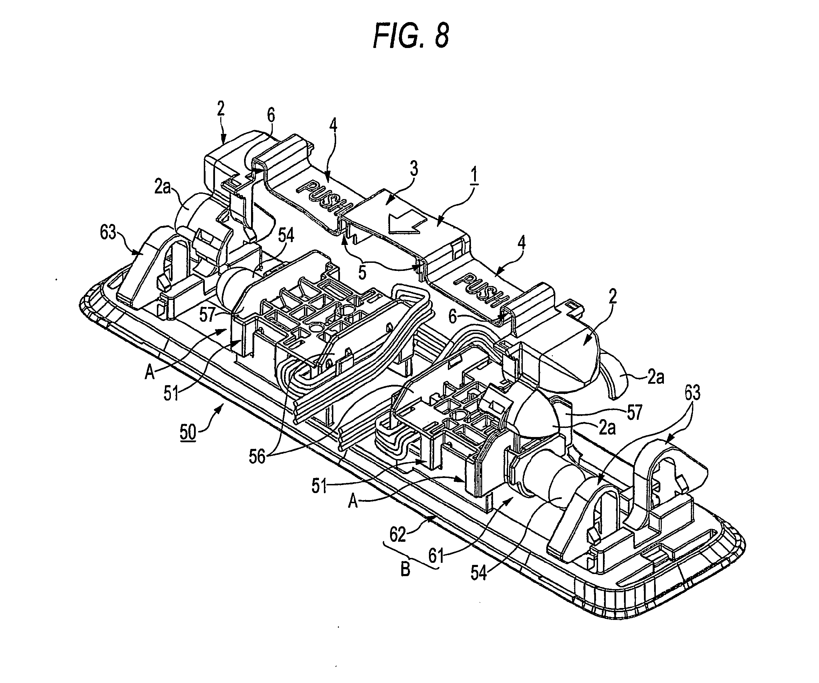

Thereafter, the locked condition of the lock portions 58a and 58b of the two door portions 2a and 2a of each bulb cover 2 is canceled as shown in Fig. 8 (see Fig. 3B), and then the gripping engagement of the grip portion 5 (of each retaining portion 4) with the upper edge portion of the vertical wall 56 of the corresponding housing 51, as well as the gripping engagement of the grip portion 6 with the upper edge portion of the vertical wall 57, is canceled, and the lamp unit holder 1 is pulled up. As a result, the two door portions 2a and 2a of each bulb cover 2 move along the outer peripheral surface of the guide 54a provided at the bulb (54)-mounting portion, and are opened, and the lamp unit holder 1 is removed. As a result, only the housings 51 are fixedly held in the housing mounting portions 64 of the holder 62, respectively, and the mounting of the room lamp 50 (in which the pair of function portions A, each having the housing 51 connected to the FFC 52, and the design portion B, having the cover lens 61 and the holder 62, are integrally combined together) is completed.

Namely, in the room lamp 50 of this embodiment, at the time of attaching the pair of function portions A (each having the housing 51 connected to the FFC 52) to the holder 62 of the design portion B, an error (such as an error in mounting position and mounting direction) in the mounting of the function portions A (held by the lamp unit holder 1) relative to the design portion B is prevented.

The retaining portions, interconnecting portion, etc., of the electrical equipment unit holder of the invention are not limited to their respective constructions of the above embodiment, but can take any other suitable form on the basis of the subject matter of the invention.

For example, although the interconnecting portion 3 of the lamp unit holder 1 of the above embodiment has elasticity, the interconnecting portion is not limited to such a construction.

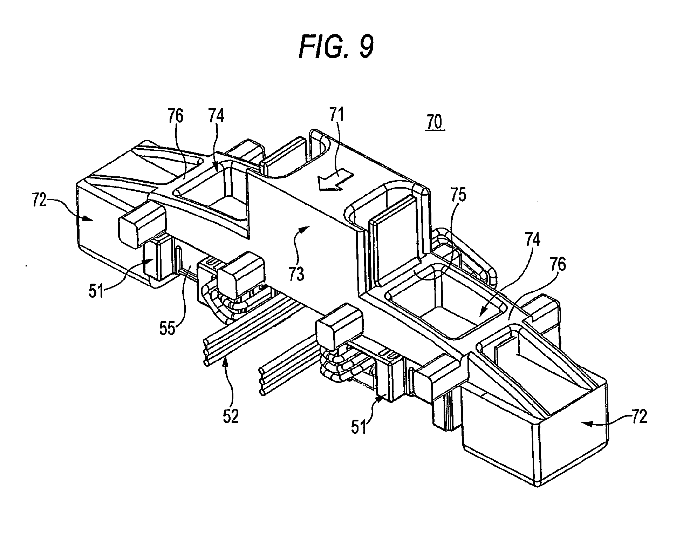

Fig. 9 is a perspective view of a second embodiment of an electrical equipment unit holder of the invention.

Like the lamp unit holder 1 of the first embodiment, the lamp unit holder 70 of this second embodiment is the electrical equipment unit holder which is made of a synthetic resin, and holds housings 51 and 51 of two function portions A (which are connected to an FFC 52) spaced a predetermined distance from each other so as to prevent that portion of the FFC 52, extending between the housings 51 and 51, from being twisted and also to prevent those portions of the FFC 52, extending long respectively from the housings 51, from being entangled.

As shown in Fig. 9, the lamp unit holder 70 includes a pair of retaining portions 74 and 74 for respectively releasably retaining the housings 51 and 51, an interconnecting portion 73 interconnecting the retaining portions 74 and 74, and bulb covers 72 formed respectively at distal ends of the retaining portions 74 in juxtaposed relation thereto. A marking 71 indicative of a mounting direction is formed on an upper surface of the interconnecting portion 73, and the operator can easily recognize the direction of mounting of the pair of housings 51 and 51 relative to a holder 62, and therefore the efficiency of the operation is enhanced.

Fittingly-holding portions 75 and 76 are formed at each of the retaining portions 74, and upper edge portions of vertical walls 56 and 57, formed on and projecting from an upper surface of each housing 51, are fitted respectively into the fittingly-holding portions 75 and 76 of the corresponding retaining portion 74.

Each bulb cover 72, formed at the distal end of the corresponding retaining portion 74, covers a corresponding bulb 54, and prevents the bulb 54 (which is exposed to the exterior until the lamp unit holder is attached to a design portion B) from contact with other members during the transport.

Like the lamp unit holder 1 of the first embodiment, the lamp unit holder 70 of this second embodiment holds the pair of housings 51 and 51 spaced a predetermined distance from each other, and therefore when the lamp unit holder, holding the housings, is packed and transferred, that portion of the FFC 52, extending between the housings 51 and 51, is prevented from being twisted, and those portions of the FFC 52, extending long respectively from the two housings 51 and 51, are prevented from being entangled.

In the lamp unit holder 70 of this second embodiment, however, the connecting portion 73 is not elastic, and therefore when packing this lamp unit holder 70, holding the pair of housings 51 and 51 spaced the predetermined distance from each other, in a transport box, this packing need to be effected in such a manner that the lamp unit holder 70 will not become bulky.

Although each of the lamp unit holders 1 and 70 of the above embodiments is provided with the bulb covers 2, 72 for protecting the bulbs 54 mounted respectively on the housings 51, the provision of the bulb covers is not always necessary in the case of a lamp unit in which bulbs, mounted respectively on housings, are not exposed to the exterior.

Although the above embodiments are directed to the lamp unit holders 1 and 70 which are used when mounting the room lamp (electrical equipment) 50 on the roof trim (interior wall member) 30, the invention is not limited to such electrical equipment unit holders, and can also be applied to the case where an electrical equipment unit, such as a courtesy lamp or a switch, is mounted on an interior wall member (such as a door trim or a dashboard) covering a car body panel.

The cable (wires) to be installed on the interior wall member is not limited to the FFC described in the above embodiments, and a flat circuit member, such as an FPC (flexible printed circuit board) and a ribbon cable, and a wire harness can be used.

As described above, in the electrical equipment unit holder of the present invention, the plurality of function portions, connected together by the wires, are held spaced the predetermined distance from each other, and therefore when the function portions are packed and transferred, there are no fears that the wires are twisted and that the wires are entangled with the function portions.

And besides, at the time of attaching the plurality of function portions to the design portion, an error (such as an error in mounting position and mounting direction) in the mounting of the function portions (held by the electrical equipment unit holder) is prevented.

Therefore, there can be provided the electrical equipment unit holder which enhances the efficiency of the operation for mounting the electrical equipment unit (comprising the plurality of function portions and the design portion attached thereto) in the electrical equipment-mounting window formed in the interior wall member, and prevents an error in the mounting of these function portions.

## Claims

1. An electrical equipment unit protection device comprising:
an electrical equipment unit includes a plurality of function portions (A) connected together by wires (52) and a design portion (B) attached to said function portions (A);
an electrical equipment unit holder (1,70) including;
retaining portions (4,74) for respectively releasably retaining said function portions (A); and
an interconnecting portion (3,73) interconnecting the adjacent retaining portions (4,74), and when said electrical equipment unit is to be mounted in an electrical equipment-mounting window formed in an interior wall member, said unit holder (1) holds the adjacent function portions (A) spaced a predetermined distance from each other by said retaining portions (4) and said interconnecting portion (3).

2. An electrical equipment unit protection device according to claim 1, wherein said interconnecting portion (3) has elasticity.

3. An electrical equipment unit protection device any one of claims 1 and 2, wherein said electrical equipment unit is a lamp unit having bulbs (54) provided respectively at said function portions (A), and bulb covers (2) for respectively protecting said bulbs (52) are formed respectively at said retaining portions (4) in juxtaposed relation thereto.

4. An electrical equipment unit protection device according to claim 3, wherein that said bulb covers (2) open toward a side opposite to a side for mounting said wire (52) through said interior wall member.

5. An electrical equipment unit protection device according to claim 4, wherein said function portion (A) has a guide portion (54a) at a bulb mounting portion, said bulb cover (2) opens along said guide portion (54a).

## Patentansprüche

1. Schutzvorrichtung für eine elektrische Ausrüstungseinheit, aufweisend:
eine elektrische Ausrüstungseinheit, die eine Mehrzahl von Funktionsabschnitten (A) enthält, gemeinsam verbunden durch Drähte (52) und einen Gestaltungsabschnitt (B), verbunden mit den Funktionsabschnitten (A);
einen Halter (1, 70) für die elektrische Ausrüstungseinheit, enthaltend;
Rückhalteabschnitte (4, 74) zum jeweils lösbaren Zurückhalten der Funktionsabschnitte (A); und
einen Verbindungsabschnitt (3, 73), der die benachbarten Rückhalteabschnitte (4, 74) miteinander verbindet, und der, wenn die elektrische Ausrüstungseinheit in einem Montagefenster für die elektrische Ausrüstungseinheit in einem Innenwandteil montiert werden soll, die Haltereinheit (1) die benachbarten Funktionsabschnitten (A) hält, beabstandet um einen vorbestimmten Abstand voneinander durch die Rückhalteabschnitte (4) und den Verbindungsabschnitt (3).

2. Schutzvorrichtung für eine elektrische Ausrüstungseinheit nach Anspruch 1, wobei der Verbindungsabschnitt (3) Elastizität besitzt.

3. Schutzvorrichtung für eine elektrische Ausrüstungseinheit nach einem der Ansprüche 1 und 2, wobei die elektrische Ausrüstungseinheit eine Lampeneinheit mit Glühbirnen (54) ist, vorgesehen jeweils an den Funktionsabschnitten (A), und Glühbirnenabdeckungen (2) zum jeweiligen Schützen der Glühbirnen (52) jeweils an den Rückhalteabschnitten (4) in nebeneinander angeordneter Beziehung dazu gebildet sind.

4. Schutzvorrichtung für eine elektrische Ausrüstungseinheit nach Anspruch 3, wobei sich die Glühbirnenabdeckungen (2) in Richtung zu einer Seite, gegenüberliegend zu einer Seite zum Montieren des Drahtes (52), durch das Innenwandteil öffnen.

5. Schutzvorrichtung für eine elektrische Ausrüstungseinheit nach Anspruch 4, wobei der Funktionsabschnitt (A) einen Führungsabschnitt (54a) an einem Glühbirnenmontageabschnitt hat, wobei sich die Glühbirnenabdeckung (2) entlang des Führungsabschnittes (54a) öffnet.

## Revendications

1. Dispositif de protection d'unité d'équipement électrique comportant :
une unité d'équipement électrique comprend une pluralité de parties fonctionnelles (A) reliées ensemble par des fils (52) et une partie de dessin (B) fixée auxdites parties fonctionnelles (A) ;
un support d'unité d'équipement électrique (1, 70) comportant :
des parties de retenue (4, 74) pour retenir de façon amovible respectivement lesdites parties fonctionnelles (A) ; et
une partie d'interconnexion (3, 73) reliant les parties de retenue adjacentes (4, 74), et lorsque ladite unité d'équipement électrique doit être montée dans une fenêtre de montage d'équipement électrique formée dans un élément de paroi intérieure, ledit support d'unité (1) maintient les parties fonctionnelles adjacentes (A) espacées d'une distance prédéterminée l'une de l'autre par la lesdites parties de retenue (4) et ladite partie d'interconnexion (3).

2. Dispositif de protection d'unité d'équipement électrique selon la revendication 1, dans lequel ladite partie d'interconnexion (3) présente une certaine élasticité.

3. Dispositif de protection d'unité d'équipement électrique selon l'une quelconque des revendications 1 ou 2, dans lequel ladite unité d'équipement électrique est une unité de lampe possédant des ampoules (54) prévues respectivement auxdites parties fonctionnelles (A), et des couvercles d'ampoule (2) pour protéger respectivement lesdites ampoules (52) sont formés respectivement dans lesdites parties de retenue (4) de façon juxtaposée.

4. Dispositif de protection d'unité d'équipement électrique selon la revendication 3, dans lequel lesdits couvercles d'ampoule (2) sont ouverts sur un côté opposé à un côté de montage du fil (52) à travers ledit élément de paroi intérieure.

5. Dispositif de protection d'unité d'équipement électrique selon la revendication 4, dans lequel ladite partie fonctionnelles (A) possède une partie de guidage (54a) dans une partie de montage d'ampoule, ledit couvercle d'ampoule (2) étant ouvert le long de ladite partie de guidage (54a).
